Europäisches Patentamt

European Patent Office

Office européen des brevets

(11) Veröffentlichungsnummer: **0 293 610**
**B1**

(12) **EUROPÄISCHE PATENTSCHRIFT**

(45) Veröffentlichungstag der Patentschrift:
28.11.90

(51) Int. Cl.⁵: **B65D 71/04, D21C 5/02**

(21) Anmeldenummer: **88106968.6**

(22) Anmeldetag: **30.04.88**

(54) Kantenschutzprofilabschnitt und Verfahren zur Herstellung.

(30) Priorität: **03.06.87 DE 3718545**

(43) Veröffentlichungstag der Anmeldung:
**07.12.88 Patentblatt 88/49**

(45) Bekanntmachung des Hinweises auf die Patenterteilung:
**28.11.90 Patentblatt 90/48**

(84) Benannte Vertragsstaaten:
**AT BE CH FR GB IT LI LU NL SE**

(56) Entgegenhaltungen:
**DE-B- 1 100 261**
**DE-B- 2 845 112**
**US-A- 4 120 441**

(73) Patentinhaber: **SIGNODE SYSTEM GMBH,**
**Julius-Kalle-Strasse 66, D-4220 Dinslaken(DE)**

(72) Erfinder: **Warych, Hans, Dipl.-Ing., Birkenkamp 23,**
**D-4650 Gelsenkirchen(DE)**

(74) Vertreter: **Andrejewski, Walter et al, Patentanwälte**
**Andrejewski, Honke & Partner**
**Postfach 10 02 54 Theaterplatz 3, D-4300 Essen 1(DE)**

## Beschreibung

Die Erfindung bezieht sich gattungsgemäß auf einen Kantenschutzprofilabschnitt, der insbes. zur Verwendung in Verbindung mit Umreifungsmaßnahmen von Warenstapeln, Paketen u. dgl. bestimmt ist. Im allgemeinen besitzen solche Kantenschutzprofilabschnitte ein winkelförmiges oder L-förmiges Profil. Die Erfindung bezieht sich fernerhin auf ein Verfahren zur Herstellung von solchen Kantenschutzprofilabschnitten.

Die (aus der Praxis) bekannten Kantenschutzprofilabschnitte der beschriebenen Zweckbestimmung und Form bestehen aus Papier, welches in mehreren Lagen unter Verwendung eines Klebers, zumeist unter Verwendung von Wasserglas als Kleber, laminiert und zum Profil geformt ist. Die Wanddicke der Profilflansche liegt zumeist im Bereich von 2 bis 10 mm. Die Länge solcher Kantenschutzprofilabschnitte richtet sich nach den speziellen Einsatzbedingungen, sie beträgt beispielsweise 20 cm oder auch mehr. Die bekannten Kantenschutzprofilabschnitte genügen den Anforderungen zumeist dann nicht ausreichend, wenn das damit versehene Gut im Freien gelagert wird. Die bekannten Kantenschutzprofilabschnitte nehmen Feuchtigkeit auf und quellen, nach mehr oder weniger langer Zeit können sie auch zerfallen. Sind sie in Verbindung mit Umreifungsmaßnahmen eingesetzt, so verändert sich dadurch die Spannung der Umreifungsbänder, was nachteilig ist.

Der Erfindung liegt die Aufgabe zugrunde, einen Kantenschutzprofilabschnitt anzugeben, der allen Anforderungen, insbes. bei Einsatz im Freien genügt, in störendem Maße Feuchtigkeit nicht aufnimmt und sich auch nicht so verändert, daß bei Verwendung in Verbindung mit Umreifungsmaßnahmen sich die Spannung der Umreifungsbänder ändert. Der Erfindung liegt fernerhin die Aufgabe zugrunde, ein Verfahren anzugeben, welches zur Herstellung solcher Kantenschutzprofilabschnitte besonders geeignet ist.

Ein erfindungsgemäßer Kantenschutzprofilabschnitt besteht aus Schnitzeln von Abfällen aus Papier und thermoplastischem Kunststoff, insbes. aus Besäumabfällen von mit thermoplastischem Kunststoff beschichtetem Verpackungspapier, wobei die Schnitzel unter Anwendung von Druck und Wärme einer Temperatur, bei der der thermoplastische Kunststoff schmilzt, zur Profilform geformt sind. - Verpackungspapier bezeichnet im Rahmen der Erfindung Papiere unterschiedlichen Flächengewichtes und auch solche, die häufig bereits als Pappe oder Karton bezeichnet werden. Überraschenderweise lassen sich aus Schnitzeln solchen Verpackungspapiers und vergleichbaren Produkten unterschiedlicher Herkunft Kantenschutzprofilabschnitte herstellen, die allen Anforderungen genügen und die wegen ihres Kunststoffgehaltes auch eine ausreichende Standzeit ohne störende Veränderungen aufweisen, und zwar selbst bei Einsatz im Freien. Im Rahmen der Erfindung liegt es, den Kantenschutzprofilabschnitt mit einer koextrudierten Kunststoffaußenschicht auszuführen. Setzt man hierfür niedermolekularen Kunststoff z. B. Polyäthylen ein, so ergibt sich eine in manipulationstechnischer Hinsicht erwünschte Oberflächenklebrigkeit.

Die erfindungsgemäßen Kantenschutzprofilabschnitte lassen sich unter Anwendung von Druck und Wärme und geeigneten formgebenden Werkzeugen auf verschiedene Weise herstellen. Gegenstand der Erfindung ist auch ein besonderes Verfahren zur Herstellung von solchen Kantenschutzprofilabschnitten, welches sich durch Einfachheit auszeichnet und zu Produkten besonders hoher Qualität führt. Dieses Verfahren ist dadurch gekennzeichnet, daß Abfälle von Papier und thermoplastischem Kunststoff zu Schnitzeln zerkleinert werden, daß die Schnitzel in eine Schneckenstrangpresse für die Aufbereitung von thermo plastischem Kunststoff eingeführt und in dieser der Kunststoff aufgeschmolzen wird, und daß die Mischung aus dem Kunststoff und den Papierschnitzeln mit Hilfe eines an die Schneckenstrangpresse angeschlossenen Strangpreßwerkzeuges kontinuierlich zu einem Kantenschutzprofilstrang geformt wird, von dem die Kantenschutzprofilabschnitte abgelängt werden. Bei diesem Verfahren wird vorzugsweise mit Abfällen, insbes. Besäumabfällen eines zumindest einseitig mit Kunststoff beschichteten Verpackungspapiers gearbeitet, bei denen der Quotient aus dem Flächengewicht des Papiers als Zähler einerseits und dem Flächengewicht des aufgebrachten Kunststoffes als Nenner andererseits im Bereich zwischen 1,0 und 6,5 vorzugsweise bei etwa 2 liegt. Arbeitet man so, so ist ohne Schwierigkeiten die Verarbeitung der Schnitzel in einer Schneckenstrangpresse möglich, wobei der Kunststoffgehalt nicht nur für diese Verarbeitung ausreicht, sondern auch zu Produkten führt, die allen Ansprüchen genügen. Das gilt insbes. dann, wenn mit Besäumabfällen gearbeitet wird, bei denen das Flächengewicht des Papiers etwa 200 g/m², das Flächengewicht des aufgebrachten Kunststoffes etwa 80 g/m² ausmacht. Der Kunststoff kann aus den verschiedensten Kunststoffen bestehen. Besonders bewährt hat sich Polyäthylen. Polyäthylen wird insbes. für Verpackungen von Getränken und anderen Lebensmitteln eingesetzt.

Im folgenden wird die Erfindung anhand einer lediglich ein Ausführungsbeispiel darstellenden Zeichnung ausführlicher erläutert. Es zeigen in schematischer Darstellung

Fig. 1 die Ansicht eines erfindungsgemäßen Kantenschutzprofilabschnittes,

Fig. 2 in gegenüber der Fig. 1 wesentlich vergrößertem Maßstab einen Ausschnitt aus dem Gegenstand der Fig. 1.

Der in den Figuren dargestellte Kantenschutzprofilabschnitt ist insbes. zur Verwendung in Verbindung mit Umreifungsmaßnahmen von Warenstapeln, Paketen u. dgl. bestimmt. Dabei wird der Kantenschutzprofilabschnitt auf eine Kante des Warenstapels, der Pakete o. dgl. aufgesetzt und von einem Umreifungsband umspannt. Der Kantenschutzprofilabschnitt verhindert, daß sich das Umreifungsband in den Warenstapel, das Paket o. dgl. einschnürt.

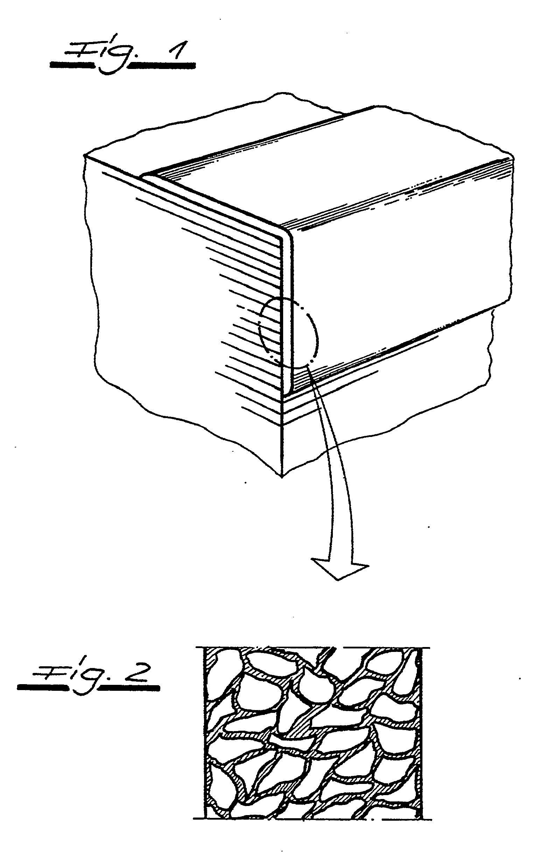

Aus einer vergleichenden Betrachtung der Fig. 1 und 2 entnimmt man, daß der Kantenschutzprofilabschnitt aus Schnitzeln aus mit thermoplastischem Kunststoff beschichtetem Verpackungspapier aufgebaut ist. Die Schnitzel sind aus Besäumabfällen von solchem Verpackungspapier hergestellt worden. Sie mögen eine Kantenlänge von 2 bis 5 mm aufweisen. Es kann aber auch mit größeren Schnitzeln gearbeitet werden. Die Schnitzel und die Kunststoffbeschichtung sind unter Anwendung von Druck und Wärme einer Temperatur, bei der die Kunststoffbeschichtung schmilzt, zu der dargestellten Profilform geformt. Dabei hat sich der thermoplastische Kunststoff so verteilt und ist eine solche Verschmelzung entstanden, daß der Kantenschutzprofilabschnitt allen Anforderungen genügt und eine hohe Standzeit aufweist, und zwar selbst in feuchter Umgebung.

## Patentansprüche

1. Kantenschutzprofilabschnitt, insbes. zur Verwendung in Verbindung mit Umreifungsmaßnahmen von Warenstapeln, Paketen u. dgl., **dadurch gekennzeichnet**, daß er aus Schnitzeln von Abfällen aus Papier und thermoplastischem Kunststoff, insbes. aus Besäumabfällen von mit thermoplastischem Kunststoff beschichtetem Verpackungspapier, aufgebaut ist, und daß die Schnitzel unter Anwendung von Druck und Wärme einer Temperatur, bei der der thermoplastische Kunststoff schmilzt, zur Profilform geformt sind.

2. Verfahren zur Herstellung von Kantenschutzprofilabschnitten nach Anspruch 1, **dadurch gekennzeichnet**, daß Abfälle von Papier und thermoplastischem Kunststoff zu Schnitzeln zerkleinert werden, daß die Schnitzel in eine Schneckenstrangpresse für die Aufbereitung von thermoplastischem Kunststoff eingeführt und in dieser der Kunststoff aufgeschmolzen wird, und daß die Mischung aus dem Kunststoff und den Papierschnitzeln mit Hilfe eines an die Schneckenstrangpresse angeschlossenen Strangpreßwerkzeuges kontinuierlich zu einem Kantenschutzprofilstrang geformt wird, von dem die Kantenschutzprofilabschnitte abgelängt werden.

3. Verfahren nach Anspruch 2, dadurch gekennzeichnet, daß mit Abfällen insbes. Besäumabfällen eines zumindest einseitig mit Kunststoff beschichteten Verpackungspapiers gearbeitet wird, bei denen der Quotient aus dem Flächengewicht des Papiers einerseits und dem Flächengewicht des Kunststoffes andererseits im Bereich zwischen 1,0 und 6,5 vorzugsweise bei etwa 2 liegt.

4. Verfahren nach einem der Ansprüche 2 oder 3, dadurch gekennzeichnet, daß mit Besäumabfällen gearbeitet wird, bei denen das Flächengewicht des Papiers etwa bei 200 g/m² liegt, das Flächengewicht des aufgebrachten Kunststoffes etwa 80 g/m² ausmacht.

5. Verfahren nach einem der Ansprüche 2 bis 4, dadurch gekennzeichnet, daß mit Kunststoffabfällen aus Polyäthylen gearbeitet wird.

## Revendications

1. Section profilée de protection d'arêtes, en particulier pour une utilisation en combinaison avec des mesures de cerclage de marchandises superposées, paquets et autres objets similaires, caractérisée par le fait, qu'elle est constituée de rognures de déchets de papier et de matière thermoplastique, en particulier de chutes de découpage de papier d'emballage revêtu de matière thermoplastique, et que la forme profilée est conférée aux rognures par application de pression et de chaleur d'une température à laquelle la matière thermoplastique fond.

2. Procédé en vue de la fabrication de sections profilées de protection d'arêtes selon la revendication 1, caractérisé par le fait, que des déchets de papier et de matière plastique sont réduits en rognures, que ces rognures sont introduites dans une extrudeuse à vis destinée au traitement de matière thermoplastique, que la matière plastique est fondue dans cette extrudeuse, et que le mélange de matière plastique et de rognures de papier est transformé en continu à l'aide d'une filière d'extrudeuse placée à l'extrémité de l'extrudeuse à vis en un profilé extrudé de protection d'arêtes que l'on découpe à longueur pour obtenir les sections profilées de protection d'aretes.

3. Procédé selon la revendication 2, caractérisé par le fait, que l'on opère avec des chutes, en particulier des chutes de découpage d'un papier d'emballage revêtu au moins sur une face de matière plastique, pour lesquelles le quotient du grammage du papier par le grammage de la matière plastique se situe dans une plage comprise entre 1,0 et 6,5 et de préférence aux environs de 2.

4. Procédé selon l'une quelconque des revendications 2 ou 3, caractérisé par le fait, que l'on opère avec des chutes de découpage pour lesquelles le grammage du papier s'élève à environ 200 g/m² et celui de la matière plastique appliquée à environ 80 g/m².

5. Procédé selon l'une quelconque des revendications 2 à 4, caractérisé par le fait, que les déchets de matière plastique utilisés sont des déchets de polyéthylène.

## Claims

1. A moulded edge protector length, of use more particularly In connection with the strapping of stacks of goods, packets or the like, characterised in that it is devised from scraps of paper and thermoplastics, more particularly trimmings of thermoplastics-lined packaging paper, and the scraps are shaped to the shape of the moulding with the use of pressure and heat at a temperature at which the thermoplacstics melts.

2. A process for the preparation of moulded edge protectors according to claim 1, characterised in that paper and thermoplastics waste are reduced to scraps, the same are introduced into an extruder for thermoplastics and the plastics is melted in the extruder and the mixture of plastics and paper scraps is moulded continuously, by means of an extruding tool disposed after the extruder, to form a moulded edge protector strand from which the edge protector lengths are parted off.

3. A process eccording to claim 2, characterised in that the material used for working is waste, more particularly trimming waste, of a packaging paper coated with plastics on at least one side, the quotient of the density of the paper and the density of the plastics being in the region between 1.0 and 6.5, preferably approximately 2.

4. A process according to claim 2 and/or 3, characterised in that the material used for working is trimming waste in which the density of the paper is approximately 200 g/m² and the density of the plastics facing is approximately 80 g/m².

5. A process according to any of claims 2 to 4, characterised in that material used for working is polythene waste.

Fig. 1

Fig. 2